# EUROPÄISCHE PATENTSCHRIFT

(11) **EP 1 345 067 B1**
(45) Veröffentlichungstag und Bekanntmachung des Hinweises auf die Patenterteilung: **25.10.2006**
(21) Anmeldenummer: 03004602.3
(22) Anmeldetag: 01.03.2003
(51) Int. Cl.: G02C 5/00, G02C 5/12, G02C 5/14, A61F 9/02

(54) **Brille, insbesondere Arbeitsschutzbrille**
Spectacles, especially working safety glasses
Lunettes de protection, notamment lunettes protectrices de travail

(30) Priorität: 14.03.2002 DE 20204053 U
(43) Veröffentlichungstag der Anmeldung: 17.09.2003
(73) Patentinhaber: Uvex Arbeitsschutz GmbH, 90766 Fürth (DE)
(72) Erfinder: Brück, Stefan, 90419 Nürnberg (DE)
(74) Vertreter: Schneck, Herbert

(56) Entgegenhaltungen:
- EP-A- 0 529 202
- EP-A- 1 156 356
- WO-A-00/36453
- WO-A-01/74566
- DE-U- 20 204 053
- US-A- 4 070 104

## Beschreibung

Die Erfindung richtet sich auf eine Brille, insbesondere eine Arbeitsschutzbrille, mit gepolsterten Auflagebereichen im Nasen- und/oder Ohrenbereich, wobei die Polsterung durch einen blasenartig aufgewölbten, relativ weichen Kunststoff realisiert ist, der eine Ausnehmung in einem relativ harten Trägermaterial überspannt.

Eine derartige Brille ist aus EP 0 529 202 B 1 bekannt. Diese Ausgestaltung hat sich in der Praxis außerordentlich bewährt und den Tragekomfort deutlich verbessert.

Der Erfindung liegt die Aufgabe zugrunde, hiervon ausgehend eine nochmalige Verbesserung der Annehmlichkeit beim Tragen und eine sichere, rutschfeste Auflage zu erzielen.

Diese Aufgabe wird erfindungsgemäß dadurch gelöst, dass die blasenartige Aufwölbung eine Mehrzahl von innen hohlen, nach unten offenen, parallel im Abstand zueinander verlaufenden rippenartigen Vorsprüngen aufweist. Dabei ist insbesondere vorgesehen, dass die blasenartige Aufwölbung insgesamt in Richtung auf die Ausnehmung und jeder rippenartige Vorsprung in Richtung parallel zur Ausnehmung verformbar ist.

Herkömmliche blasenartige Vorwölbungen wiesen einerseits eine glatte Oberfläche auf, sodass nicht die maximale Sicherheit gegen ein Verrutschen gegeben ist, andererseits vermittelt die Vorwölbung der Oberfläche auch eine gewisse Steifigkeit. Demgegenüber gewährleisten die erfindungsgemäß vorgesehenen rippenartigen Vorsprünge sowohl eine Sicherung gegen ein Verrutschen und ermöglichen gleichzeitig ein Nachgeben nach innen, sodass ein besonders hoher Tragekomfort erzielt wird.

Vorzugsweise besteht der relativ weiche Kunststoff aus TPE und der relativ harte Kunststoff aus PC (Polycarbonat) bzw. PC-Blend.

Nachfolgend wird die Erfindung anhand einer bevorzugten Ausführungsform in Verbindung mit der Zeichnung näher beschrieben. Dabei zeigen:

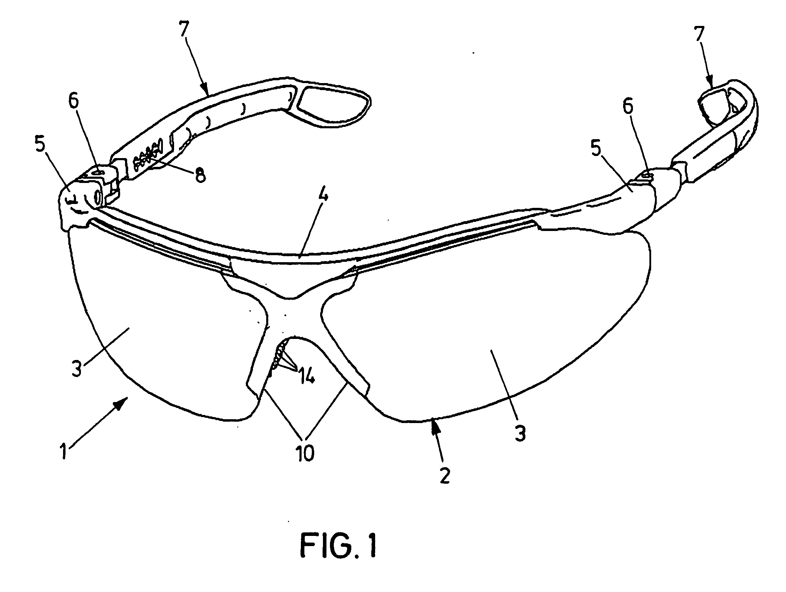

- Fig. 1: eine perspektivische Ansicht einer erfindungsgemäßen Arbeitsschutzbrille von vorne,

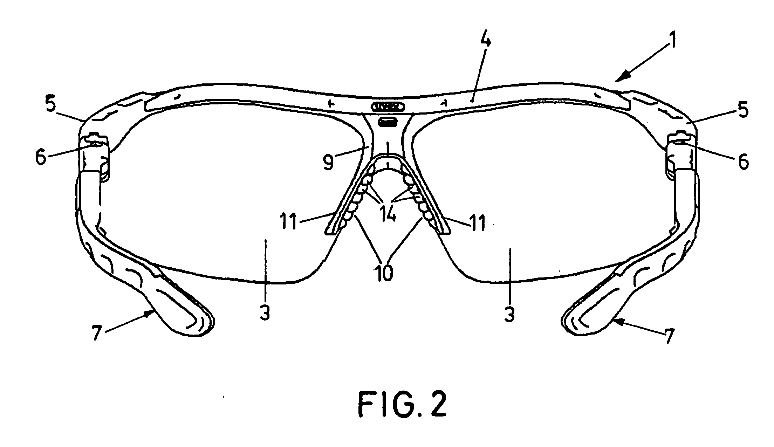

- Fig. 2: eine perspektivische Ansicht der Arbeitsschutzbrille von hinten,

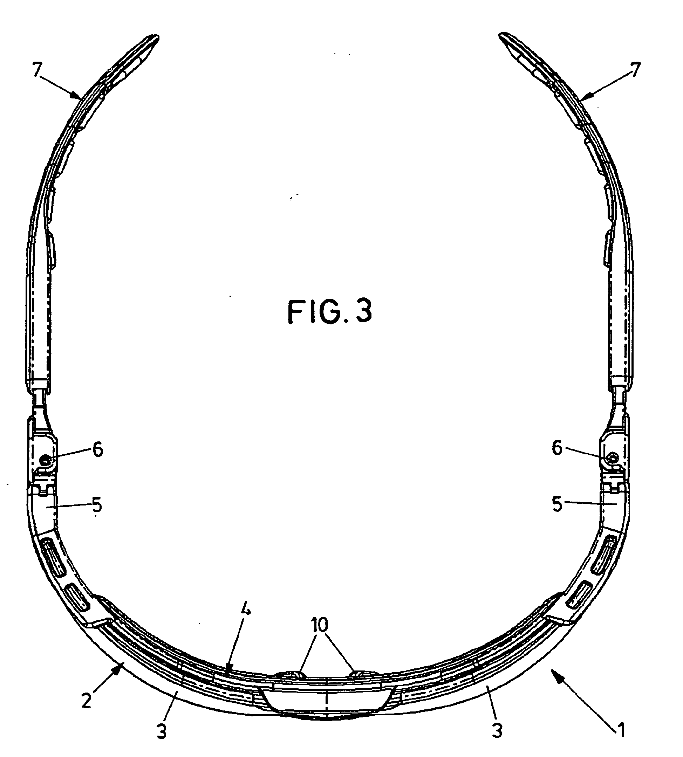

- Fig. 3: eine Ansicht der Arbeitsschutzbrille von oben, und

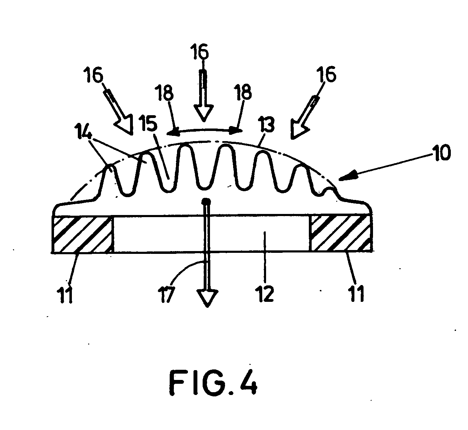

- Fig. 4: eine Schnittdarstellung durch einen Nasenauflagebereich.

Eine in der Zeichnung dargestellte Arbeitsschutzbrille 1 umfasst eine Scheibe 2 mit zwei miteinander verbundenen Scheibenteilen 3, welche an einem oberen Rahmenteil 4 befestigt ist. An den seitlichen Enden 5 des oberen Rahmenteils sind über Schwenkgelenke 6 Bügel 7 angelenkt, welche mittels einer Längenverstelleinrichtung 8 längenverstellbar sind. Diese Lösung wird im Einzelnen beschrieben in der EP 0 878 728 A1.

Einstückig mit dem oberen Rahmenteil verbunden ist ein Nasenbrückenteil 9 mit Nasenauflagebereichen 10.

Diese Nasenauflagebereiche 10 werden jeweils gebildet durch eine Verlängerung 11 des Nasenbrückenteils aus relativ hartem Kunststoff mit einer Ausnehmung 12, über welche ein relativ weicher Kunststoff mit einer blasenartig vorgewölbten Hüllkurve 13 gespritzt ist, wobei aber keine aus dem Stand der Technik an sich bekannte kugelkalottenförmige Blase vorgesehen ist, sondern eine Mehrzahl zueinander parallel laufender rippenartiger Vorsprünge 14, die durch Täler bzw. Längsschlitze 15 voneinander getrennt sind.

Durch diese Ausgestaltung wird erreicht, dass beim Auftreten eines Drucks in Richtung der Pfeile 16 die an den Nasenflügeln anliegenden Rippen 14 insgesamt nach innen auf die Ausnehmung 12 zu in Richtung des Pfeils 17 nachgeben können, und darüber hinaus jede einzelne Rippe in gewissem Umfang einen Bewegungsspielraum zur Seite in Richtung der Pfeile 18 aufweist, sodass insgesamt eine hohe Flexibilität und Nachgiebigkeit und dadurch ein besonders angenehmes Tragegefühl erreicht wird, wobei aber gleichzeitig die rippenartige Konfiguration ein Verrutschen der Brille relativ zur Nase behindert.

Im vorliegenden Ausführungsbeispiel wurde die rippenartige Konfiguration in Verbindung mit dem Nasenauflagebereich erläutert. In gleicher Weise könnten solche Ausgestaltungen aber auch an anderen Bereichen der Brille, insbesondere am Bügelende, realisiert werden.

## Patentansprüche

1. Brille (1), insbesondere Arbeitsschutzbrille, mit gepolsterten Auflagebereichen (10) im Nasen- und/oder Ohrenbereich, wobei die Polsterung durch einen blasenartig aufgewölbten, relativ weichen Kunststoff realisiert ist, der eine Ausnehmung (12) in einem relativ harten Trägermaterial überspannt, **dadurch gekennzeichnet, dass** die blasenartige Aufwölbung (13) eine Mehrzahl von innen hohlen, zur Innenseite der blasenartigen Aufwölbung hin offenen, parallel im Abstand zueinander verlaufenden rippenartigen Vorsprüngen (14) aufweist.

2. Brille nach Anspruch 1, **dadurch gekennzeichnet, dass** die blasenartige Aufwölbung insgesamt in Richtung auf die Ausnehmung und jeder rippenartige Vorsprung in Richtung parallel zur Ausnehmung verformbar ist.

3. Brille nach Anspruch 1, **dadurch gekennzeichnet, dass** der relativ weiche Kunststoff aus TPE besteht.

4. Brille nach Anspruch 1, **dadurch gekennzeichnet, dass** der relativ harte Kunststoff aus PC bzw. PC-Blend besteht.

## Claims

1. A pair of goggles (1), particularly a pair of safety goggles, having padded contact areas (10) in the nose and/or ear area, wherein the padding is realized by means of a bubble-like convex, relatively soft plastic material which spans a gap (12) in a relatively hard base material, **characterized in that** the bubble-like convexity (13) comprises a plurality of hollow rib-like projections (14) which are open towards the inside of the bubble-like convexity and extend parallel to each other and at a distance from one another.

2. A pair of goggles according to claim 1, **characterized in that** the bubble-like convexity as a whole is deformable in a direction towards the gap and each rib-like projection is deformable in a direction parallel to the gap.

3. A pair of goggles according to claim 1, **characterized in that** the relatively soft plastic material consists of TPE.

4. A pair of goggles according to claim 1, **characterized in that** the relatively hard plastic material consists of PC or PC Blend.

## Revendications

1. Lunettes de protection (1), en particulier lunettes protectrices de travail, comprenant des zones d'application rembourrées (10) dans la région du nez et/ou des oreilles, le rembourrage étant réalisé par une matière plastique relativement souple, courbée à la façon d'une bulle, qui recouvre un évidement (12) dans un matériau de support relativement dur, **caractérisées en ce que** la courbure en forme de bulle (13) comprend une pluralité de saillies (14) du type nervure creusées à l'intérieur, ouvertes en direction du côté intérieur de la courbure en forme de bulle, s'étendant parallèlement à distance les unes des autres.

2. Lunettes de protection selon la revendication 1, **caractérisées en ce que** la courbure en forme de bulle peut être déformée dans l'ensemble en direction de l'évidement et chaque saillie du type nervure dans une direction parallèle à l'évidement.

3. Lunettes de protection selon la revendication 1, **caractérisées en ce que** la matière plastique relativement souple est constituée de PET.

4. Lunettes de protection selon la revendication 1, **caractérisées en ce que** la matière plastique relativement dure est constituée de PC et/ou de mélange de PC.
